Europäisches Patentamt

(19) European Patent Office

Office européen des brevets

(11) Veröffentlichungsnummer: **0 157 117**
A1

(12) **EUROPÄISCHE PATENTANMELDUNG**

(21) Anmeldenummer: 85101206.2

(22) Anmeldetag: 06.02.85

(51) Int. Cl.⁴: **G 08 B 29/00**, G 01 S 7/52

(30) Priorität: 13.02.84 CH 760/84

(43) Veröffentlichungstag der Anmeldung: 09.10.85
Patentblatt 85/41

(84) Benannte Vertragsstaaten: **CH DE FR GB IT LI**

(71) Anmelder: **CERBERUS AG, Alte Landstrasse 411,
CH-8708 Männedorf (CH)**

(72) Erfinder: **Steiner, Peter, Hombrechtikerstrasse 16,
CH-8645 Jona (CH)**
Erfinder: **Genähr, Rudolf, Breitenloostrasse 4,
CH-8708 Männedorf (CH)**
Erfinder: **Siegwart, David, Durststrasse 15,
CH-8706 Meilen (CH)**

(74) Vertreter: **Tiemann, Ulrich, Dr.-Ing., c/o Cerberus AG
Patentabteilung Alte Landstrasse 411,
CH-8708 Männedorf (CH)**

(54) **Testvorrichtung für Intrusionsmelder.**

(57) Die Überwachung von Einbruchsmeldern erfolgt durch eine Vorrichtung, die im Melder angeordnet ist. Diese Vorrichtung sorgt dafür, daß bei der Installation und während des Betriebes des Melders seine elektrischen Parameter optimal eingestellt sind. Abweichungen dieser Parameter von ihrem Nominalwert und der Ort dieser Abweichungen werden angezeigt.

0157117

## Testvorrichtung für Intrusionsmelder

Die Erfindung betrifft eine Vorrichtung zum Testen der Ansprechbarkeit eines Intrusionmelders auf umgebungsbedingte und melderspezifische Nutz- und Störsignale und zum Lokalisieren der vom Nominalwert abgewichenen elektrischen Parameter.

Bekanntlich werden zur Ueberwachung von Objekten, wie z.B. Fabrik-, Verwaltungs-, Lager- und Ausstellungsgebäuden, Einkaufszentren, Banken, Arealen, Abstellplätzen, Flughäfen usw., Systeme verwendet, die das unbefugte Eindringen von Personen detektieren und den Einbruchalarm an den für den Schutz dieser Objekte zuständigen Personenkreis, wie z.B. Sicherheitsorgane oder Polizei, weiterleiten. Die Ueberwachungssysteme bestehen aus einer Vielzahl von Intrusionsmeldern, die über das grossflächige Objekt verteilt und an eine Zentrale oder mehrere Unterzentralen angeschlossen sind, welche nach Ansprechen des Melders den Alarm erzeugen und an den Objektschutz weiterleiten. Die Einbruchmelder sind als Infrarot-, Ultraschall-, Mikrowellen-, Schall-, Erschütterungsmelder sowie als kapazitive Melder ausgebildet. Diesen Meldern ist gemeinsam, dass sie auf umgebungsbedingte oder melderspezifische Signale ansprechen. Einbruchspezifische Signale, wie z.B. Bewegung von Personen, Geräusche von Glasbruch oder von mechanischer Einwirkung auf Wände und Gegenstände, erzeugen im Melder einen elektrischen Signalpegel, der je nach Distanz des Melders vom Ereignis bzw. Geschehen die Alarmschwelle ganz oder nur teilweise erreicht. Beabsichtigt ist, dass mindestens der Melder anspricht, der dem Ereignis bzw. Geschehen am nächsten ist. Ein Alarm wird nur bei Ueberschreiten einer bestimmten Pegelschwelle erzeugt.

Die Melder sprechen auch auf Störsignale an. Umgebungsbedingte Störsignale sind z.B. Geräusche, Luftturbulenzen, Temperaturschwankungen usw. Melderspezifische Störsignale sind z.B. Sensorrauschen usw. Wenn die Störsignale einen gewissen Pegel erreichen, wird die Gefahr für Fehlalarme anwachsen.

Ferner können Fehlalarme auftreten, wenn Teile des Melders durch Alterung, unzulässige Umwelteinflüsse, z.B. Betauung, Vibrationen, Sabotageeinwirkungen usw. von ihren Nominalwerten abweichen. Diese Fehlalarme können eine direkte Folge dieser Abweichungen sein. Ferner können umgebungsbedingte Störsignale, die normalerweise unterdrückt werden, bei einer Parameterabweichung in gewissen Baugruppen Fehlalarme auslösen.

In der US-Patentschrift 3 383 678 (J.L. Palmer) ist ein Bewegungsmelder beschrieben, der nach dem Doppler-Prinzip arbeitet. In dieser Patentschrift ist auch eine Funktionskontrolle der elektrischen Teile des Melders beschrieben. Diese Funktionskontrolle wird in der Weise durchgeführt, dass ein Teil der Sendeenergie vor der Antenne ausgekoppelt und über einen "Motion-Simulator" am Ausgang der Empfangsantenne eingespeist wird. Die Aufgabe des Motion-Simulators ist, die Bewegung eines Einbrechers zu simulieren und damit die Funktion des elektrischen Teiles des Melders bei einem Einbruchsignal zu prüfen. Bei dieser Prüfung der Funktionstüchtigkeit des Melders kann jedoch nicht festgestellt werden, inwieweit die einzelnen Teile des Melders von ihren Nominalwerten abgewichen sind. Durch diesen Test ist nur das Verhalten des Melders auf Bewegungseinflüsse festgestellt worden. Das Verhalten der Melder bei Störungen ist hiermit noch nicht geprüft. Letzteres bedeutet eine erhöhte Melderbereitschaft zu Fehlalarmen. Als weiterer Nachteil ist anzumerken, dass die beschriebene Prüfung keine Eingrenzung des Fehlers

0157117

innerhalb der elektrischen Schaltung zulässt. Die beschriebene Prüfung ist eine reine Funktionsprüfung, die nur während des Betriebs des Melders durchgeführt werden kann.

Die Erfindung hat die Aufgabe, die erwähnten Nachteile der Prüfung des bekannten Melders zu beseitigen und darüber hinaus eine Einstellung der veränderlichen Parameter zu überprüfen, z.B. Empfindlichkeit, Integrationszeit, Bandpass, Schwellwerte und andere Werte, die vor der Inbetriebnahme des Melders an seinem Ort und unter Berücksichtigung der zu überwachenden Umgebung einzustellen sind. Gleichzeitig soll die Erfindung es ermöglichen, Parameterabweichungen schon zu erkennen bevor diese zu einem zwangsläufigen Fehlalarm oder zu einer Nichtdetektion eines Einbruches führen. Auf diese Weise sollen Fehlfunktionen des Melders mittels einer Frühdiagnose vermieden werden. Ausserdem soll die Frühdiagnose den Fehlerort innerhalb der elektronischen Schaltung des Melders angeben.

Diese Aufgabe der Erfindung wird durch die Merkmale des Patentanspruchs 1 gelöst.

Die Erfindung bezieht sich auf aktive Melder, wie Ultraschall-, Mikrowellen- und kapazitive Melder und auf passive Melder, wie Infrarot-, Schall- und Erschütterungsmelder.

Ausführungsbeispiele der Erfindung werden anhand der Zeichnungen näher erläutert. Es zeigen:

Fig. 1)  Das erfindungsgemässe Prinzip der Ueberwachung der elektrischen Parameter bei einem Einbruchmelder;

Fig. 2)  in graphischer Darstellung den zeitlichen Ablauf der Ueberwachungtests während der Betriebsdauer des Melders;

Fig. 3)  in graphischer Form das Frequenz-Spektrum, das durch eine besonders einfache Testimpulsform erzeugt wird;

Fig. 4)  ein Zeitdiagramm einer Testfunktion;

Fig. 5)  das zur Testfunktion der Fig. 4 gehörende Spektrum für den Fall, dass tf >> tp;

Fig. 6)  das zur Testfunktion der Fig. 4 gehörende Spektrum für den Fall, dass tf nur einige wenige Perioden von tp umfasst;

Fig. 7)  zeigt einen Melder, bei dem die Tests bei der Installation und während der Betriebszeit durchgeführt werden.

0157117

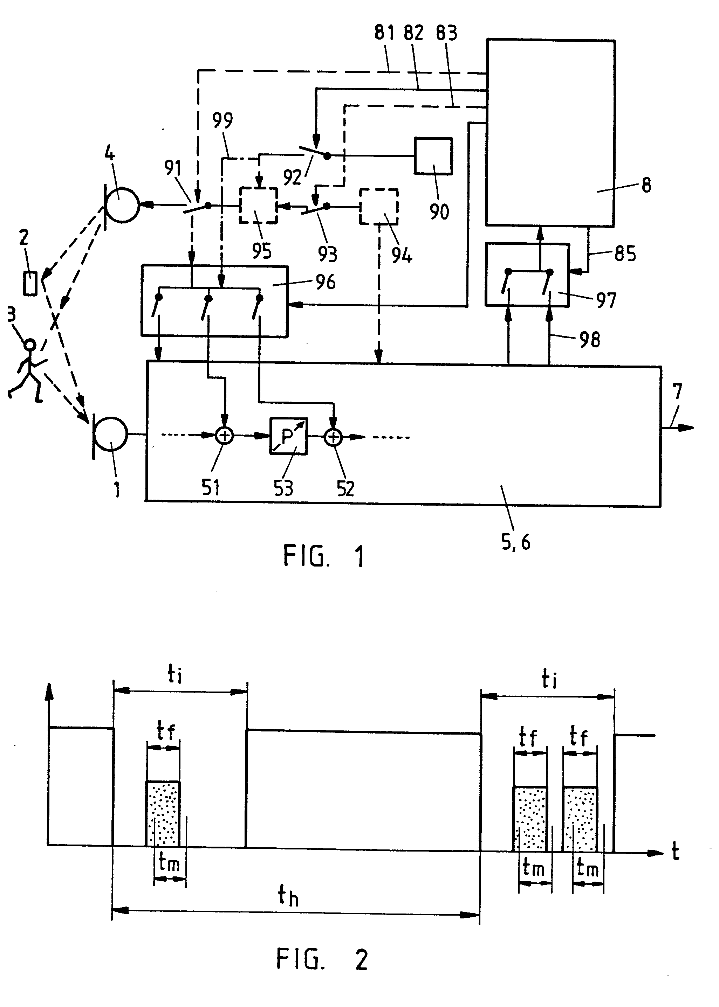

Die Fig. 1 zeigt einen Einbruchmelder in schematischer Darstellung. Ein Sensor 1 empfängt aus dem zu überwachenden
Raum 2 oder vom zu überwachenden Objekt bzw. vom Einbrecher
3 Signale und wandelt diese in der Auswerteschaltung 5 in
elektrische Signale um. Solche elektronischen Auswerteschaltungen sind allgemein bekannt. Daher wird die Auswerteschaltung 5 im Zusammenhang mit der Fig. 1 nicht näher beschrieben. Eine solche Auswerteschaltung erzeugt an ihrem
Ausgang ein Alarmsignal 7, wenn die vom Empfänger 1 empfangenen Signale auf Einbruchsaktivitäten hinweisen. Anhand der
Fig. 1 soll nun dargelegt werden, dass die Erfindung, nämlich die Ueberwachung von elektrischen Parametern an verschiedenen Orten der Auswerteschaltung 5, sowohl für aktive
als auch passive Melder verwendet werden kann. Wie bereits
erwähnt werden als aktive Intrusionsmelder Ultraschall-,
Mikrowellen-, und kapazitive Melder bezeichnet. Diese Melder
haben sowohl einen Sender als auch Empfänger. Die passiven
Intrusionsmelder, die nur einen Empfänger besitzen, sind als
Infrarot-, Schall- und Erschütterungsmelder ausgebildet.

Die Fig. 1 zeigt einen gestrichelt gezeichneten Teil, der
nur für einen aktiven Intrusionsmelder notwendig ist, der
im folgenden zusammen mit der Erfindung näher beschrieben
wird. Die Logik-Steuerschaltung 8 steuert über die Leitungen
die Schalter 91, 92, 93 in die gezeichneten Stellungen. Der
Generator 94 kann nun seine Sendefrequenz $f_o$ über die geschlossenen Schalter 93, 91 auf den Sender 4 geben, der diese
Sendefrequenz in den zu überwachenden Raum 2 abstrahlt. Die
durch die überwachenden Objekte 3 reflektierten Strahlen werden vom Empfänger 1 empfangen und in der nachfolgenden Auswerteschaltung 5 verarbeitet.

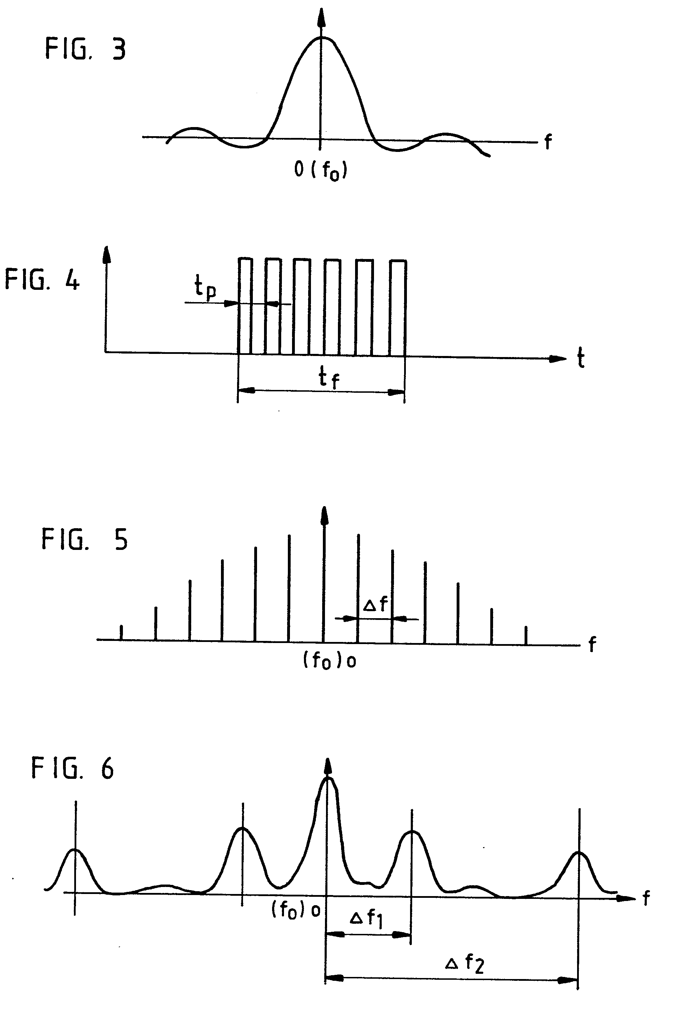

Wenn nun der Melder bei seiner Installation an die für den
Raum 2 charakteristischen Eigentümlichkeiten angepasst werden soll, so geschieht dies durch Einstellen der entsprechenden Parameter in der Auswerteschaltung 5. Das wird nun
näher erklärt. Ueber Leitung 81 steuert die Logikschaltung
8 den Schalter 91, so dass der Sender 4 vom Generator 94 getrennt ist. Die Logikschaltung 8 steuert den Schalter 92
über Leitung 82 in der Weise, dass der Generator 90 über die
Mischstufe 95 am Multiplex-Schalter 96 angeschlossen ist.
In der Mischstufe 95 wird die Testfrequenz $f_x$ des Testgenerators 90 mit der Sendefrequenz $f_o$ des Generators 94 moduliert. Diese modulierten Testsignale werden nun an den verschiedenen Orten der Auswerteschaltung 5 nach einem bestimmten Programm, welches in der Logik-Steuerschaltung 8 gespeichert ist, eingespeist. Die Logik-Steuerschaltung 8 steuert
über die Leitung 84 die entsprechenden Schalter so, dass sie
geschlossen sind. Von den Einspeisestellen sind in der
Fig. 1 nur die beiden Einspeisungen 51, 52 gezeigt. Zum Beispiel soll mit dem Stromkreis 53 die Empfindlichkeit des Melders für den betreffenden Raum 2 optimal eingestellt werden.
Zu diesem Zweck folgt zuerst die Einspeisung der modulierten Testsignale, wie sie z.B. in den Fig. 3, 5 und 6 gezeigt
sind, zuerst an der Stelle 51. In diesem Zusammenhang sei
noch darauf hingewiesen, dass die Logik-Steuerschaltung 8
über Leitung 85 die Schalter 97 so gesteuert hat, dass am
Ende der Auswerteschaltung 5 die Signale empfangen werden
können und über die Leitungen 98 in die Logik-Steuer-Schaltung 8 gelangen. Dort werden sie mit den gespeicherten Wellenzügen der wichtigen Ergebnis-Signalen verglichen. Wenn
keine Uebereinstimmung vorliegt, so wird dies in der Schaltung 8 angezeigt. Der Stromkreis 53 wird nun so lange durch
das Service-Personal eingestellt, bis die Schaltung 8 eine
optimale Uebereinstimmung zwischen den Ergebnis-Signalen und den gespeicherten SOLL-Wellenzügen vorhanden zeigt. Die Einspeisung der Ergebnis-Signale an der Stelle 52 der Auswerteschaltung 5 ist notwendig, um im Betrieb die nach dem Stromkreis 53 liegenden Teile der Auswerteschaltung unabhängig vom Wert des einstellbaren Parameters im Stromkreis 53 zu prüfen.

Im folgenden wird nun angenommen, dass der Melder der Fig. 1 ein passiver Melder ist, der bekanntlich keinen Sender 4 sondern nur den Empfänger 1 enthält. Die gestrichelt gezeichneten Steuerleitungen 81, 83 sowie die Bauteile 4, 91, 93, 94, 95 sind nicht vorhanden. Wenn nun bei der Installation des passiven Melders der Test durchgeführt werden soll, so steuert die Logik-Steuerschaltung 8 über Leitung 82 den Schalter 92 so, dass der Test-Generator 90 seine Testsignale über den geschlossenen Schalter 92 und die strichpunktierte Leitung 99 auf den Multiplex-Schalter 96 und an die Einspeisestelle 51 gibt. Die optimale Einstellung der Empfindlichkeit des Melders an den zu überwachenden Raum 2 mit seinen Eigentümlichkeiten folgt nun in gleicher Weise wie es bereits im Zusammenhang mit dem aktiven Melder besprochen worden ist. Der Vollständigkeit halber wird jedoch darauf hingewiesen, dass in diesem Fall die Testsignale nicht mit der Sendefrequenz $f_o$ moduliert werden, da der passive Melder bekanntlich keinen Sender hat. Für gewisse Schaltungsteile, insbesondere bandpassartige Anordnungen, kann es jedoch zweckmässig sein, trotzdem eine Modulation durchzuführen, wobei an Stelle der Sendefrequenz $f_o$ die entsprechende Mittenfrequenz tritt.

Der Melder der Fig. 1 wird auch während seiner Betriebszeit in bestimmten zeitlichen Intervallen auf die Richtigkeit der elektrischen Parameter seiner Auswerteschaltung 5 überprüft bzw. getestet. Die elektrischen Parameter der Auswerteschaltung 5 sind z.B. Verstärkungsfaktor, Mittenfrequenz, Zeitkonstante, Bandpassbreite, Schwellwerte, Empfindlichkeit usw. Die Fig. 2 zeigt den zeitlichen Ablauf der Tests bzw. Prüfungen während dieser Betriebsdauer. Es sei nun angenommen, dass in einem Zeitintervall $t_b$ = 10 s bis 100 s periodisch die Testzeit $t_i$ von ungefähr 100 bis 1'000 ms vorgesehen ist. Die eigentlichen Tests können sequentiell ablaufen, dann werden innerhalb dieser Testzeit $t_i$ während den Zeiten $t_f$ von ca. 40 bis 400 ms die Testsignale des Testgenerators 90 an die entsprechenden Stellen der Auswerteschaltung 5 eingespeist. Ist nur ein Testpunkt vorgesehen oder falls die Einspeisung an mehreren Testpunkten parallel erfolgt, so liegt nur eine Zeit $t_f$ vor, wie es die linke Seite der Fig. 2 zeigt. Diese Zeit $t_f$ ist so gewählt, dass Störungen, die durch irgendwelche Schaltzustände elektronischer Bauteile entstehen, die Testsignale nicht beeinflussen können. Während der sogenannten Testfreigabezeit $t_m$, die gegenüber der Zeit $t_f$ versetzt ist, findet die Erfassung und Auswertung der Ergebnis-Signale über die Leitungen 98 und Multiplex-Schalter 97 in der Logikschaltung 8 statt. Die in der Fig. 2 angegebenen Zeiten gelten nur für das beschriebene Ausführungsbeispiel bei einem aktiven bzw. passiven Intrusionsmelder. Selbstverständlich können diese Zeiten verlängert bzw. verkürzt werden. Es sei noch darauf hingewiesen, dass die Logik-Schaltung 8 der Fig. 1, die in der Fig. 2 angegebenen Zeiten steuert.

Die Fig. 3 zeigt ein Frequenzspektrum, das durch die besonders einfache Testimpulsform eines einzelnen Rechteckimpulses durch den Testgenerator 90 erzeugt wird. Eine allfällige Modulation mit der Sendefrequenz $f_o$ bewirkt lediglich eine Verschiebung des Nullpunktes (0) auf die Sendefrequenz $f_o$. Dies ist in der Fig. 3 symbolisch angedeutet.

In der Fig. 4 ist eine Reihe von Impulsen auf der Zeit-Abszisse t aufgetragen. Der Testgenerator 90 der Fig. 1 erzeugt diese Impulse, welche in der Zeit $t_f$ von z.B. 40 ms durch die Schalter 92 und 96 an die gewünschten Punkte der Auswerteschaltung 5 angelegt werden. In der Fig. 4 hat jeder Impuls eine zeitliche Dauer $t_p$.

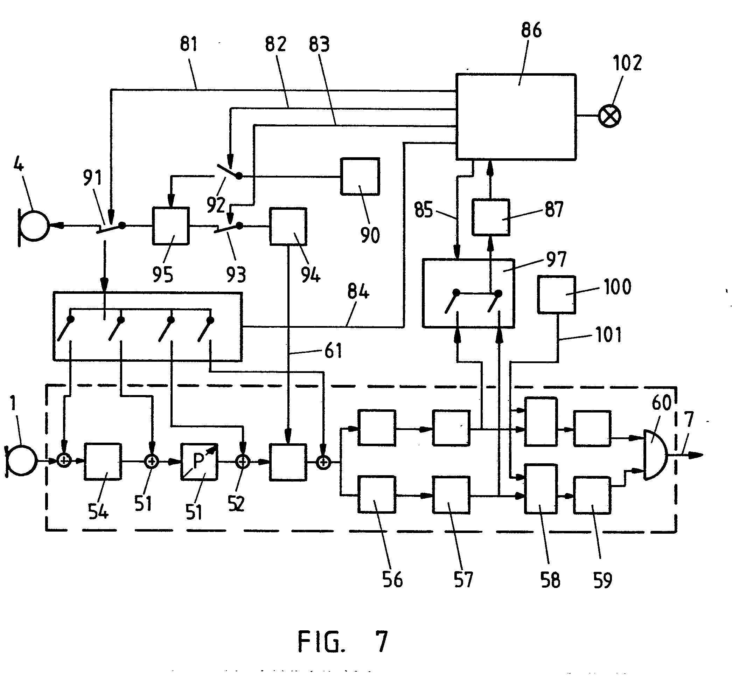

Die Fig. 5 und 6 zeigen Frequenzspektren, welche aus der Impulsreihe der Fig. 4 dann entstehen, wenn das zeitliche Verhältnis der Pulsbreite $t_p$ zur Zeit $t_f$ der gesamten Impulsreihe verändert wird. Die verschiedenen Frequenzspektren werden für bestimmte Tests bei speziellen elektronischen Bauteilen der Auswerteschaltung 5 verwendet. Dies wird später im Zusammenhang mit der Fig. 7 näher beschrieben. Die Fig. 5 zeigt ein Frequenzspektrum in dem Fall, dass $t_f > t_p$ ist. Der Nullpunkt (0) dieses auf der Frequenz-Abszisse f dargestellten Spektrums wird auf die Sendefrequenz $f_o$ verschoben, wenn es sich um den Test eines aktiven Melders (mit Sender 4) handelt. Die Form des in der Fig. 5 gezeigten Spektrums wird für eine punktselektive Messung von elektrischen Parametern in der Auswerteschaltung 5 verwendet.

Das in der Fig. 6 gezeigte Frequenzspektrum, welches auf der Frequenz-Abszisse f aufgetragen ist, ergibt sich, wenn der Impulszug der Fig. 4, welcher bekanntlich durch den Testgenerator 90 erzeugt wird, so geändert wird, dass die Zeit $t_f$ nur einige wenige Perioden der Impulszeit $t_p$ umfasst. Da diese Funktion sowohl für einen passiven Melder (ohne Sender und Sendefrequenz), als auch für einen aktiven Melder (mit Sender 4 und Sendefrequenz $f_o$) gilt, sind diese beiden Werte an der Abszisse f eingetragen. Die in der Fig. 6 gezeigte Form des Frequenzspektrums eignet sich für die integrale Prüfung von selektiven Stromkreisen der Auswerteschaltung 5. Hierbei ist besonders an Bandpassfilter gedacht.

Zusammenfassend kann gesagt werden, dass der Testgenerator 90 der Fig. 1 durch Veränderungen reiner Pulszüge Frequenzspektren aller möglichen Art erzeugen kann, die für spezielle Prüfungszwecke bestimmter Stromkreise in der Auswerteschaltung 5 nützlich sind.

Die Fig. 7 zeigt ein Ausführungsbeispiel für einen Ultraschallmelder. Die Auswerteschaltung 5 besteht aus einem Verstärker 54, einem Potentiometer 53, einem Modulator, Bandpässen 56 und Integratoren 57, Komparatoren 58 sowie Speicher 59 mit anschliessendem UND-Gatter 60. Das UND-Gatter 60 erzeugt dann Alarm, wenn bei beiden Zweigen der Elemente 56, 57, 58, 59 Ausgangssignale zur gleichen Zeit vorhanden sind. Da die Auswerteschaltung 5 nicht Gegenstand der Erfindung ist, wird sie auch nicht näher beschrieben.

Der aktive Ultraschall-Melder der Fig. 7 hat auch einen Sender 4, der mit der Sendefrequenz $f_o$ vom Generator 94 über die geschlossenen Schalter 93, 91 versorgt wird. Die Sendefrequenz $f_o$ wird über Leitung 61 auf den Modulator 55 gegeben, in welchem diese Sendefrequenz die Empfangsfrequenz vom Empfänger 1 mit der Sendefrequenz demoduliert wird. Während des Betriebs sind die Multiplex-Schalter 96, 97 sowie der Schalter 92 im geöffneten Zustand, wie die Fig. 7 zeigt. Die Logik-Steuerschaltung besteht im Ausführungsbeispiel der Fig. 7 aus einem Mikroprozessor 86, der über Leitungen 81, 82,

0157117

83, 84, 85 die Schalter 91, 92, 93, 96, 97 steuert. Ferner
empfängt der Mikroprozessor 86 die Ergebnis-Signale über
einen Analog-/Digital-Umwandler 87 und wertet diese Ergebnis-
Signale aus. Zum Beispiel stellt er einen Vergleich zwischen
der Form dieser Ergebnis-Signale und den gewünschten Wellenzügen für die verschiedenen Prüf- bzw. Testpunkte der Auswerteschaltung fest.

Im folgenden wird zuerst der sogenannte Installationstest und
dann der periodisch wiederkehrende Betriebstest erläutert.

Wenn der Melder an den Ort installiert wird, dessen Raum 2
er zu überwachen hat, so muss seine Ansprechbarkeit für den
zu überwachenden Raum optimal eingestellt werden können. Dies
erfolgt dadurch, dass der Mikroprozessor 86 über Leitung 81
den Schalter 91 in die nicht gezeichnete Stellung bringt,
so dass der Modulator 95 mit dem Eingang des Multiplex-Schalters 96 verbunden ist. Ferner wird über Steuerleitung 82 der
Schalter 92 in die nicht gezeichnete Stellung gebracht, so
dass der Test-Generator 90 seine Testfunktion der Fig. 4 auf
den Modulator 95 bringen kann. Wenn nun das Programm im
Mikroprozessor 86 vorschreibt, dass die Testsignale des Generators 90 mit der Sendefrequenz $f_o$ des Generators 94 moduliert werden soll, so bleibt der Schaltung 93 in der gezeichneten, geschlossenen Position. Im Modulator 95 findet die
Modulation statt. Wenn das Programm im Mikroprozessor 86 vorschreibt, dass keine Modulation gemacht werden soll, so wird
über Steuerleitung 83 der Schalter 93 geöffnet. In diesem
Fall gelangen die reinen Testsignale des Generators 90 über
den Modulator 95 auf den Multiplex-Schalter 96. Der Mikroprozessor 86 stellt entsprechend seinem Programm über Steuerleitung 84 die einzelnen Schaltelemente des Multiplex-Schalters 96 ein. Die Ergebnis-Signale werden z.B. hinter den Integratoren 57 entnommen und über die Leitungen 98 auf den Multiplex-Schalter 97 gegeben. Da diese Signale analog sind, werden sie im nachfolgenden Analog/Digital-Umwandler 87 umgewandelt und als Digitalwerte in den Mikroprozessor 86 gegeben, der die Ergebnis-Signale mit den SOLL-Wellenzügen vergleicht. Wie bereits im Zusammenhang mit den Fig. 3, 4, 5, 6 gesagt, können für die Prüfung der verschiedensten Bauteile, die günstigsten Frequenzspektren als Testsignale benutzt werden.

PATENTANSPRUECHE

1. Vorrichtung zum Testen der Ansprechbarkeit eines Intrusionsmelders auf umgebungsbedingte und melderspezifische Nutz- und Störsignale und zum Lokalisieren der vom Nominalwert abgewichenen elektrischen Parameter,  g e -
k e n n z e i c h n e t   d u r c h :

   - Einen Generator (90) zum Erzeugen von Testsignalen;

   - eine erste Schalteranordnung (96) zum wahlweisen Anlegen der Testsignale an die gewünschten Einspeisepunkte (51), (52) der elektronischen Auswerteschaltung (5) des Melders;

   - eine zweite Schalteranordnung (97) zum wahlweisen Auskoppeln der durch die Testsignale erzeugten Ergebnissignale;

   - eine logische Steuereinheit (8), die die Ergebnissignale mit den richtigen Signalen vergleicht und bei Auftreten eines Fehlers des Ergebnissignales den Fehlerort in einer Anzeigeeinrichtung (102) anzeigt.

2. Vorrichtung nach Anspruch 1,  d a d u r c h   g e k e n n -
z e i c h n e t ,  dass mindestens zwei Testsignale vor und nach einem Schaltungsteil (53) mit veränderbaren Parametern über die erste Schalteranordnung (96) eingespeist wird und die Logikschaltung (8) an mindestens zwei Ergebnissignalen die für den Betrieb des Melders massgeblichen Parametereinstellung bestimmt.

3. Vorrichtung nach Anspruch 1, d a d u r c h   g e k e n n -
z e i c h n e t,   dass ein aktiver Intrusionsmelder einen
Generator (94) zur Erzeugung der für den Sender (4) des
Melders vorgesehenen Sendefrequenz ($f_o$) enthält, und
diese Sendefrequenz die Testsignale des Generators (90)
moduliert, wobei die modulierten Testsignale über die
erste Schalteranordnung (96) in die Einspeisepunkte (51),
(52) der Auswerteschaltung (5) gelangen und als Ergebnis-
signale über die zweite Schalteranordnung (97) in die
logische Steuereinheit (8) gegeben werden.

4. Vorrichtung nach Anspruch 1, d a d u r c h   g e k e n n -
z e i c h n e t,   dass ein passiver Intrusionsmelder
einen Generator (90) zur Erzeugung der Testsignale enthält, welche über die erste Schalteranordnung (96) in
die Einspeisepunkte (51), (52) der Auswerteschaltung (5)
gelangen und als Ergebnissignale über die zweite Schalteranordnung (97) in die logische Steuereinheit (8) gegeben werden.

5. Vorrichtung nach Anspruch 1, d a d u r c h   g e -
k e n n z e i c h n e t,   dass ein passiver Intrusionsmelder einen Generator zur Erzeugung einer Mittenfrequenz
$f_m$ enthält und diese Frequenz die Testsignale des Generators (90) moduliert, wobei die modulierten Testsignale
über die erste Schalteranordnung (96) in die Einspeisepunkte (51), (52) der Auswerteschaltung (5) gelangen und
als Ergebnissignale über die zweite Schalteranordnung
(97) in die logische Steuereinheit (8) gegeben werden.

6. Vorrichtung nach Anspruch 1 oder Anspruch 3, d a -
   d u r c h   g e k e n n z e i c h n e t, dass der Generator (90) seine Testsignale in Form von Dreieck-, Rechteck-, Sägezahn-, Trapez-Pulsen oder als Sinusschwingungen
   erzeugt.

7. Vorrichtung nach Anspruch 1, d a d u r c h   g e k e n n -
   z e i c h n e t,  dass die logische Steuereinheit (8)
   nach einer bestimmten Betriebszeit ($t_b$) des Melders periodisch eine Testzeit ($t_i$) von bestimmter Dauer durchführt, wobei der Generator (90) nur während eines Teiles
   ($t_f$) der Testzeit ($t_i$) seine Testsignale über die erste
   Schalteranordnung (96) an die gewählten Einspeise-Punkte
   (51), (52) der Auswerteschaltung (5) gibt, und die logische Steuereinheit (8) nur zu einer Zeit ($t_m$) die Ergebnissignale von ausgewählten Entkoppelpunkten der Auswerteschaltung (5) über die zweite Schalteranordnung (97)
   empfängt.

0157117

1 (3)

FIG. 1

FIG. 2

0157117

2 (3)

FIG. 3

0 ( f₀ )

FIG. 4

FIG. 5

(f₀) 0

FIG. 6

(f₀) 0

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 782 405 (WEISZ u.a.) <br> * Seite 1, Spalte 1, Zeile 15 - Spalte 2, Zeile 26 * | 1,2 | G 08 B 29/00 <br> G 01 S 7/52 |
| | --- | | |
| A | TECHNISCHE MITTEILUNGEN A.E.G. - TELEFUNKEN, Band 58, Nr. 3, 1968, Seiten 179-181, Berlin, DE; E. STRANG: "Überwachungsbausteine für fehlersichere Signalverarbeitung" <br> * Insgesamt * | 1 | |
| | --- | | |
| A | US-A-4 118 688 (GLENNON) <br> * Spalte 1, Zeile 30 - Spalte 2, Zeile 35; Ansprüche * | 1 | |
| | --- | | RECHERCHIERTE SACHGEBIETE (Int. Cl.4) |
| A | CH-A- 613 793 (HOCHIKI CORP.) <br> * Ansprüche * | 1,2 | |
| | ----- | | G 08 B <br> G 01 S |

Der vorliegende Recherchenbericht wurde für alle Patentansprüche erstellt.

| Recherchenort | Abschlußdatum der Recherche | Prüfer |
|---|---|---|
| DEN HAAG | 04-06-1985 | REEKMANS M.V. |